# EUROPEAN PATENT APPLICATION

(11) **EP 2 958 202 A2**
(43) Date of publication of application: **23.12.2015**
(21) Application number: 15172207.1
(22) Date of filing: 15.06.2015
(51) Int. Cl.: H01S 3/098, H01S 3/067, H01S 3/16

(54) **A MODELOCKED LASER**

(30) Priority: 16.06.2014 GB 201410701
(71) Applicant: Fianium Limited, Southampton Hampshire SO31 4RA (GB)
(72) Inventor: CLOWES, John Redvers, Hampshire, BH25 5TT (GB); ALMEIDA, Paulo, Southampton, SO15 7RL (GB); GRUDININ, Anatoly Borisovich, Southampton, SO16 7AL (GB)
(74) Representative: Carpmaels & Ransford LLP

(57) **Abstract**

A modelocked laser for generating pulses comprises a laser cavity, wherein the laser cavity comprises a length of hollow core fiber and wherein the length of hollow core fiber is such that the laser cavity supports a repetition rate of the generated pulses below 5 MHz.

## Description

### Field

This invention relates to a modelocked laser for generating laser pulses.

### Background

Due to size and optical limitations, it is difficult to achieve low repetition rates directly from a laser oscillator such as a modelocked diode-pumped solid state (DPSS) or fiber laser. In theory, the repetition rate of a DPSS laser can be reduced by increasing the physical separation between the cavity mirrors, but in practice the resulting laser size soon becomes impractical. The issue can be alleviated by providing lenses or curved mirrors to "fold" the cavity, such that a 50 MHz ultrafast DPSS cavity at 1 micron wavelength might comprise several reflectors and collimators to produce a reasonably compact design, but with the disadvantage of increased complexity. Repetition rate can also be reduced by providing a pulse-picker to select pulses generated by a laser oscillator. However, pulse pickers and associated electronics also add cost, size, and complexity to a laser system.

### Summary

The present invention provides a modelocked laser for generating pulses, comprising a laser cavity, wherein the laser cavity comprises a length of hollow core fiber and wherein the length of hollow core fiber is such that the laser cavity supports a repetition rate of the generated pulses below 5 MHz. In some embodiments, the length of hollow core fiber is such that the laser cavity supports a repetition rate of the generated pulses below 1 MHz.

Hollow core fiber is flexible and may be wound into a coil with small diameter whilst still achieving low-loss guidance, thereby permitting a compact design for the laser cavity. Moreover, due to its hollow core, the hollow core fiber has a lower nonlinearity compared to step-index silica-core fibers and in this way reduces or avoids nonlinear effects which can otherwise make modelocking more difficult or otherwise prevent proper operation of the modelocked laser.

In various embodiments, the present invention thus provides low repetition rate laser pulses directly from a modelocked laser oscillator. Preferably, the modelocked laser comprises a passively modelocked laser.

As used herein, the term "hollow core fiber" refers to any optical fiber having a hollow (e.g: non solid) core region, preferably comprising air or another gas. Depending on the fiber design, light may be guided in hollow core fibers in various ways known *per se* to those skilled in the art, for example photonic bandgap guidance or via total internal reflection (TIR) or via the anti-resonant reflecting optical waveguide (ARROW) principle.

The hollow core fiber may comprise a microstructured fiber. Herein, we use the term "microstructured fiber" as a generic term to refer to any optical fiber wherein a cladding region includes longitudinally extending or distributed regions having a different index of refraction than material of the cladding adjoining or surrounding the longitudinally extending or distributed regions. Thus, the term "microstructured fiber" includes, but is not limited to, optical fibers comprising longitudinally extending regions in the form of an array of air holes having a lower index of refraction than material of the cladding surrounding the air holes. Microstructured fiber may alternatively and equivalently be referred to as "Photonic Crystal Fiber" (PCF).

The hollow core microstructured fiber may comprise a photonic bandgap fiber (PBF). The term "Photonic bandgap fiber" refers to any optical fiber which guides light by photonic bandgap guidance. Photonic bandgap fiber and photonic bandgap guidance are known *per se* to those skilled in the art and will not be described in any detail herein.

In some embodiments, a hollow core photonic bandgap in the form Bragg fiber or a Kagome-type fiber may be employed. Bragg fiber may alternatively and equivalently be referred to as an "Omniguide" fiber". In some embodiments, the hollow core fiber may comprise negative curvature fiber or a nano-void fiber.

The laser cavity may comprise a fiber based gain medium, for example fiber that is doped with one or more rare earths, such as, for example, the rare earths Erbium, Ytterbium, Thulium, Holmium or Neodynium. For example, the rare earth doped fiber may comprise an Erbium doped fiber, a Ytterbium doped fiber, an Erbium-Ytterbium doped fiber, or a Thulium doped fiber, or a Thulium-Holmium doped fiber.

In embodiments, the length of hollow core fiber is such that the total cavity length supports a repetition rate of the generated pulses below 5 MHz. In various embodiments, the total cavity length may be greater than 10 meters, greater than 20 m, greater than 30 m, or greater than 100 m. In some embodiments, the total cavity length may be greater than 150 m, or greater than 1500 m. As used herein, the term "total cavity length" refers to the physical distance travelled by light in a single pass of the cavity. As will be understood by those skilled in the art, this physical distance can be used to determine an optical path length for the cavity, taking into account that refractive index may be different at different locations within the cavity. The optical path length in turn determines the repetition rate of the generated pulses.

In some embodiments, the time duration of the pulses generated by the modelocked laser may be of the order of nanoseconds (e.g: between 1 ns and 100 ns). In other embodiments the time duration of the pulses generated by the modelocked laser may be what are referred to herein as "short picosecond pulses", that is, pulses having a time duration of between 1 ps and 100 ps. (It is noted that ranges stated herein are inclusive of the endpoints). In other embodiments, the pulses generated by the modelocked laser are ultrashort pulses (i.e.: they have a time duration no greater than 1 ns). In various embodiments, the time duration of the generated pulses is no greater than 100 ps, no greater than 20 ps, no greater than 10 ps, or no greater than 5 ps.

In various embodiments, the laser pulses are generated as a regular pulse train of individual pulses. The time interval between consecutive pulses in the generated pulse train may be constant.

In various embodiments, the laser pulses generated by the mode locked laser can have a wavelength (e.g: a center wavelength) of about 1 µm (e.g: 1064 nm), or about 1.5 µm (e.g: 1550 nm) or about 2 µm (e.g: 1990 nm). The use of a gain medium including the rare earth Ytterbium can provide laser pulses having a wavelength of about 1 µm; a gain medium including the rare earth Erbium can provide laser pulses having a wavelength of about 1.5 µm; and a gain medium including the rare earth Thulium can provide laser pulses having a wavelength of about 2 µm.

### Brief description of the drawings

In order that the invention may be more easily understood, embodiments thereof will now be described by way of example with reference to accompanying drawings, in which:
Figure 1 is a schematic of a passively modelocked laser according to an exemplary embodiment;
Figure 2 is a schematic of a passively modelocked laser according to another exemplary embodiment.

### Detailed description

### Overview

In embodiments of the present invention, a hollow core fiber such as a hollow core microstructured optical fiber is provided within a modelocked laser cavity.

The hollow core microstructured fiber is a low nonlinearity fiber, e.g: an air-core microstructured fiber in which propagation of light occurs mainly within air so that nonlinearity is much lower compared to silica-core step-index fibers.

Thus, the hollow core fiber leads to a low nonlinearity cavity which in turn allows high pulse energies to be extracted from the cavity without double pulse operation. The modelocked laser may generate pulses having a pulse energy of greater than 5nJ, greater than 10nJ, greater than 100nJ, or greater than 1 microJoule.

The laser cavity may be a linear cavity or a ring cavity. In the case of a linear cavity, the cavity length may greater than 30 m, greater than 150 m or greater than 1500 m, and in this way embodiments achieve a repetition rate of below 5 MHz, below 1 MHz, or below 100 KHz respectively. As will be understood by those skilled in the art, the ring cavity length for supporting a particular repetition rate is twice as long the linear cavity length which supports that repetition rate, and accordingly limits given herein for cavity lengths can apply to ring cavities as well, provided that the lengths are doubled.

The laser cavity may include a modelocking element to promote preferential gain for pulsed operation while suppressing continuous wave operation. The modelocking element can be passive or active, such as a saturable absorber, which can be a transmissive device, or a reflective device such as a semiconductor saturable absorber mirror (SESAM). The saturable absorber can, for example, be based on a semiconductor, carbon nanotube, graphene, or any other mechanism known in the art for achieving optical saturable absorption for passive modelocking. As will be appreciated by those skilled in the art, a saturable absorber has specific optical properties which can be optimised for the laser cavity, for example non-saturable loss and relaxation time. It will be understood that the modelocked pulses may be generated in other ways, for example by modelocking based on nonlinear polarization evolution. Modelocking may be external or internal to the cavity, or "hybrid", that is, a combination of external and internal modelocking.

The length of hollow core fiber may form the majority of the cavity length. For example, the length of hollow core fiber may form at least 50%, at least 75%, or at least 90% of the total cavity length. In some embodiments, e.g: in the case of a fiber-based cavity, the length of hollow core fiber may form the majority of fiber in the cavity, e.g: at least 50%, at least 75%, or at least 90% of the total optical fiber within the cavity.

In some embodiments, the cavity is an all-fiber cavity or comprises one or more all-fiber sections. As used herein, the term "all fiber" refers to a cavity or cavity section which employs fiber or fiber-pigtailed elements such that the "all fiber" cavity or section can be assembled via optical fiber splices.

The laser cavity includes a gain material which may comprise a rare-earth doped optical fiber (e.g: Ytterbium doped or Erbium doped fiber). Modelocked laser oscillators based on an optical fiber gain medium have benefits over "bulk" modelocked oscillators, since within the cavity, the laser light is guided within an optical fiber, removing the need to steer the direction of the laser light using reflectors and avoiding the effects of diffraction. Additionally, a compact package can be achieved by coiling the cavity fiber with a small coil diameter whilst still achieving low-loss guidance of the laser light within the fiber.

Alternatively, a solid-state (bulk) gain medium may be provided (such as Vanadate or YAG, or glass-based gain medium such as bulk rare-earth doped glass). The use of a bulk gain medium can simplify the cavity and further reduce optical nonlinearity to allow a high pulse energy to be extracted without double-pulse operation.

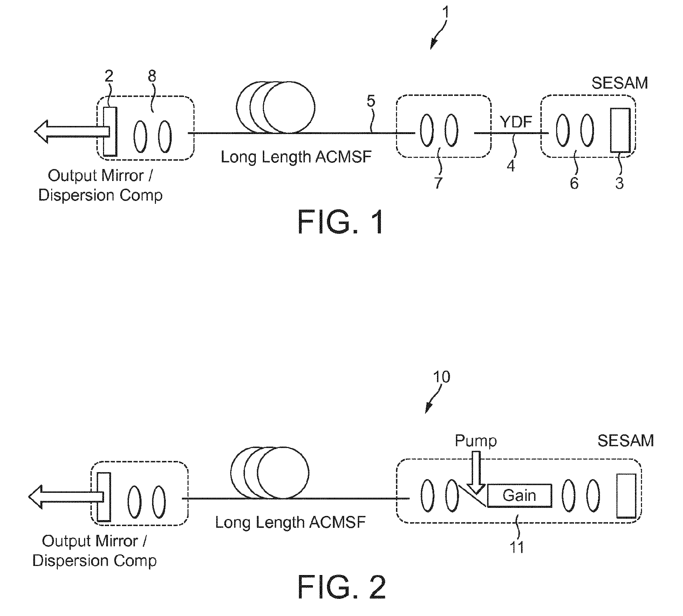

Figure 1 is a schematic of a passively modelocked laser 1 according to an exemplary embodiment. The laser cavity of laser 1 is a linear cavity comprising an output reflector 2, a SESAM 3, an amplifier fiber 4, and a hollow core fiber 5 in the form of an air-core microstructured optical fiber (ACMSF) 5. As shown, SESAM 3 is in optical communication with amplifier fiber 4 via lenses 6. Amplifier fiber is in optical communication with hollow core fiber 5 via lenses 7. Hollow core fiber 5 is in optical communication with output reflector 2 via lenses 8. The total cavity length is the physical distance travelled by light between the output reflector 2 and the SESAM 3, via the length of hollow core fiber 5.

The amplifier fiber 4 is a 50 cm length of Ytterbium fiber supporting a mode field diameter of 10 µm. It forms part of a Ytterbium-doped fiber amplifier including pump diodes (not shown) and one or more pump-signal combiners.

The length of air-guiding microstructured optical fiber is chosen to obtain a repetition rate of 2 MHz directly from the modelocked oscillator. This configuration results in an output pulse duration of 5 ps.

Figure 2 is a schematic of a passively modelocked laser 10 according to another exemplary embodiment. The modelocked laser 10 differs from the laser 1 of Figure 1 in that a solid-state (bulk) gain medium 11 is provided instead of a Ytterbium-doped amplifier fiber. This results in a lower nonlinearity cavity compared with the cavity of the laser 1 of Figure 1. The gain medium 11 may for example comprise Vanadate, if picosecond pulses are required, or a glass-based gain medium if femtosecond pulses are required.

Although Figures 1 and 2 show an output reflector 2 in the form of a mirror, output reflector may alternatively comprise a grating such as, for example, a fiber Bragg grating (FBG) or volume Bragg grating (VBG).

To facilitate modelocking, dispersion compensation may be provided within the cavity. The output reflector 2 may be selected to provide dispersion compensation and various suitable output reflectors 2 which achieve this will be evident to those skilled in the art. Alternatively, or in addition, bulk or fiber gratings may be included within the cavity to provide dispersion compensation.

A lower repetition rate may be obtained in the examples of Figures 1 and 2 by increasing the length of the air-guiding microstructured optical fiber. In this way, the repetition rate obtained directly from the modelocked oscillator can be reduced to below 1 MHz, below 500 KHz or below 100 KHz.

The pulse duration of the generated pulses depends on intracavity dispersion, which in turn depends *inter alia* on the length and dispersion profile of the air-guiding microstructured fiber. In various embodiments, pulse durations no greater than 100 ps, no greater than 20 ps, no greater than 10 ps, or no greater than 5 ps may be generated.

As will be understood from the foregoing, various embodiments of the present invention provide a compact modelocked laser design which allows for the delivery of low repetition rate pulses directly from the laser oscillator. Such low repetition rates (e.g: less than 5MHz, less than 1 MHz, less than 500 KHz, or less than 100 KHz) facilitate, for example, materials processing applications in which an upper limit constraint may be placed on repetition rate due to limitations on scanning optics or due to the amount of thermal energy (number of pulses) than can be applied to a sample area in a given time.

Many modifications and variations will be evident to those skilled in the art, that fall within the scope of the appended claims. For example, a laser cavity may include a combination of both a fiber-based gain medium, such as any fiber-based gain medium described herein, and a solid state (bulk) gain medium, such as a solid state gain medium comprising Vanadate, which can be in bulk form.

## Claims

1. A modelocked laser for generating pulses, comprising a laser cavity, wherein:
the laser cavity comprises a length of hollow core fiber; and
wherein the length of hollow core fiber is such that the laser cavity supports a repetition rate of the generated pulses below 5 MHz.

2. A modelocked laser according to claim 1, wherein the hollow core fiber comprises a microstructured optical fiber.

3. A modelocked laser according to claim 2, wherein the hollow core fiber comprises a photonic bandgap microstructured optical fiber.

4. A modelocked laser according to any preceding claim, wherein the laser cavity comprises a passive modelocking element.

5. A modelocked laser according to claim 4, wherein the passive modelocking element comprises a semiconductor saturable absorber mirror.

6. A modelocked laser according to any preceding claim, wherein the length of hollow core fiber has a length equal to or greater than 50% of the total cavity length.

7. A modelocked laser according to any preceding claim, wherein the length of hollow core fiber has a length equal to or greater than 70% of the total cavity length.

8. A modelocked laser according to any preceding claim, wherein the length of hollow core fiber has a length equal to or greater than 90% of the total cavity length.

9. A modelocked laser according to any preceding claim, wherein the total cavity length is greater than 20 m.

10. A modelocked laser according to any preceding claim, wherein the total cavity length is greater than 100 m.

11. A modelocked laser according to any preceding claim, wherein the laser cavity further comprises a fiber based gain medium.

12. A modelocked laser according to any preceding claim, wherein the laser cavity is an all-fiber laser cavity.

13. A modelocked laser according to any preceding claim, wherein the time duration of the generated pulses is no greater than 20 ps.

14. A modelocked laser according to any preceding claim, wherein the time duration of the generated pulses is no greater than 5 ps.

15. A modelocked laser according to any preceding claim, wherein the time interval between consecutive pulses in the generated pulse train is constant.
